# EUROPEAN PATENT APPLICATION

(11) **EP 4 815 226 A1**
(43) Date of publication of application: **30.09.2026**
(21) Application number: 25167022.0
(22) Date of filing: 28.03.2025
(51) Int. Cl.: H02B 13/045, H02G 5/00, H02G 5/06, F16L 25/01, F16L 27/12

(54) **APPARATUS FOR CONNECTION TO AN ELECTRICAL DEVICE, USE AND SYSTEM**

(71) Applicant: Hitachi Energy Ltd, 8050 Zürich (CH)
(72) Inventor: Saxl, David, 8046 Zürich (CH); Hinder, Andrin, 5113 Holderbank AG (CH)
(74) Representative: Michalski Hüttermann & Partner mbB

(57) **Abstract**

The invention relates to an apparatus (1) for connection to a gas-insulated electrical device (100) and providing an interior for insulating gas, e.g. gas-insulated line or gas-insulated switchgear, comprising
a first housing member (10) sectionally forming the interior, having openings (11, 12, 13) of which a first opening (11) includes a first flange (F1); and
a second housing member (30) sectionally forming the interior, including a further flange (F3) and connected for telescoping in an axial direction (X1) and in an electrically conductive manner to the first housing member (10) at a further opening (13) of the openings (11, 12, 13).

## Description

### Technical Field

The invention relates to an apparatus for connection to a gas-insulated electrical device, e.g. gas-insulated line or gas-insulated switchgear, wherein the apparatus provides an interior for insulating gas and has openings. The invention further relates to a system and to a use.

### Background Art

A gas-insulated electrical devices, such as gas-insulated lines or gas-insulated switchgear, can be connected to one another by means of an apparatus which can hold insulating gas and has at least two openings. For example, openings might be connected by means of flanges to electrical devices. In order to compensate for thermal expansion or displacement of electrical devices relative to one another, for example, it is known to make the apparatus flexible or movable. However, taking into account the sensible environment of such electrical devices and the demand to not have insulating gas leak, it is crucial to provide the apparatus with high safety against gas leakage and failure.

### Summary of invention

It is therefore an object of the invention to provide solutions in respect to an apparatus for connection to a gas-insulated electrical device which aim for lowered production cost, higher lifetime and increased safety. Particularly it is an object to avoid or reduce disadvantages of known solutions.

The object of the invention is solved by the features of the independent claims. Preferred implementations are detailed in the dependent claims.

Thus, the object is particularly solved by an apparatus for connection to a gas-insulated electrical device, the apparatus providing an interior for insulating gas, the gas insulated electrical device comprising or consisting of a gas-insulated line or gas-insulated switchgear.

The apparatus comprises a first housing member sectionally forming the interior, having openings of which a first opening includes a first flange and particularly of which a second opening includes a second flange, particularly wherein the first housing member extends monolithically between the openings.

The apparatus comprises a second housing member sectionally forming the interior, particularly the second housing member including a further flange, and particularly the second housing member connected for telescoping in an axial direction and in an electrically conductive manner to the first housing member at a further opening of the openings.

A rod structure may be configured for connection of the first housing member, e.g. the first flange, with the second housing member, e.g. the further flange, and/or with another apparatus, e.g. another first flange, and especially outside from the interior, wherein the connection may be and/or extend along the axial direction. If present, the another first flange may be comprised by another apparatus to be connected to the apparatus. The another apparatus may be at least substantially identical in construction relative to the apparatus.

The first flange and the second flange may be arranged substantially perpendicularly in respect to one another.

The first flange and the further flange may be arranged facing away from one another, particularly along the axial direction.

In other words, particularly, a gas-insulated connection apparatus is suggested to be connected between gas-insulated lines and/or gas-insulated switchgear and which can be provided for thermal/length compensation and for lateral dismantling of the interior. Optionally, the arrangement of flanges provide a T-shaped connection. The apparatus may have a flange member configured for telescoping relative to another flange member, the flanges of the flange members arranged on opposite sides, and the flange members electrically connected to one another. Optionally, one flange member has a second flange substantially rectangularly arranged to its first flange, wherein this flange member may be formed as a substantially monolithic part. The apparatus includes a rod or bar structure for a linear connection along an axial direction outside the interior. The rod or bar structure can connect between two or more flange members and/or between two or more of the connection apparatus.

The invention is based on the idea that the two housing members are equipped with a telescoping function while the first housing member is kept as a simple part despite its two or three or more openings and two respective flanges. It may be that a simple linear or even T-connection is provided and rods provide that inside pressure is compensated on the outside. The first housing member may be provided without additional flange connections. The apparatus is more integrated and leak proof. The apparatus does not need any springs and less flange connections are needed. The apparatus in itself might be free from flange connections, meaning that except for two or more flanges at ends of the apparatus there should not necessarily be further flanges or flange connections. Due to the sliding or telescoping of the second housing member, both a lateral dismantling of the interior and a thermal compensation can be realized. The apparatus can be configured as a bus bar line for an electrical device and/or T-connection to a feeder bay of an electrical device. Thus, a savings potential is given.

A gas-insulated electrical device may comprise or consist of a gas-insulated line or gas-insulated switchgear. Generally, the gas-insulated electrical device and/or or apparatus may be configured for medium voltage and/or high voltage. For the purposes of this disclosure, the term medium voltage refers to a voltage from 1 kV to 72.5 kV, and the term high voltage refers to a voltage greater than 72.5 kV, particularly up to 800 kV or 1200 kV. Generally, the gas-insulated electrical device and/or or apparatus may be configured for nominal electrical currents of 4 kA ± 3 kA or 63 kA ± 50 kA. The insulating gas may comprise at least one of SF6, Airplus C5K, C4FN, CO2, N2, O2 and pressurized air and/or any mixture thereof.

The apparatus has or provides an interior, volume or tank for insulating gas. Particularly, the apparatus can hold and/or guide the insulating gas. For example, insulating gas might flow through the apparatus. Typically, the apparatus is configured to be gas tight in locations different from the openings.

The apparatus has two or more housing members. A housing member may be made from metal, e.g. may be at least partially or entirely made as a cast part, and/or may be provided as a monolithic part. A housing member may have a wall section for delimiting the interior from an exterior. The wall section may comprise an average thickness of at least 5 mm.

Typically, the first and the second housing member together at least substantially form the interior. Each housing member may form a part or section of the interior. The first housing member may have the first opening with a first flange, e.g. the first opening surrounded, delimited or defined by the first flange.

The first housing member may have a second opening with a second flange, e.g. the second opening surrounded, delimited or defined by the second flange. The first and second openings may be arranged to face in different directions, e.g. may be arranged substantially obliquely or perpendicularly to one another, e.g. such that their flange faces are arranged at least substantially perpendicularly to one another.

The first housing member may have the further opening, typically without a flange. The first housing member may be shaped to connect the first, second and/or further opening monolithically and/or in a single piece.

The first flange may be formed monolithically with the first housing member. The second flange may be formed monolithically with the first housing member.

The second housing member may have the further flange. The second housing member can telescope in the axial direction relative to the first housing member, e.g. based on mechanical engagement at the further opening of the first housing member. For example, the second housing member may be guided relative to, e.g. on or in, the first housing member. The further flange may be formed monolithically with the further housing member. The second housing member may be formed monolithically. The second housing member may have a tube-like shape and/or hollow shape. The second housing member may extend substantially in the axial direction, e.g. for insulating gas to be guided therein.

It may be provided that the first flange on the first housing member and the further flange on the second housing member face away from one another in the axial direction. The first and further flanges may face towards at least substantially opposite directions, e.g. such that their flange faces are arranged at least substantially in parallel to one another. The distance between the first and further flanges can be adjusted from the telescoping occurring between the housing members. The flanges can connect along a substantially linear path.

A flange, such as the first flange, second flange and/or further flange, may have a substantially annular shape with the opening surrounded and/or formed by the annular shape. A flange typically has a flat flange face configured for abutting with another flange face, a cover, an electrical device or the like. A flange typically has a plurality of recesses or bores configured for providing a bolt connection, especially the recesses or bores extending from the flange face and/or in the axial direction.

The openings may comprise the second opening. The second opening may be part of the first housing member and may comprise the second flange. The first flange and the second flange may be arranged perpendicularly in respect to one another. The first housing member may extend monolithically between the openings, e.g. between the first, second and further openings. Particularly, the first housing member may have three or more openings and may be formed as a structural unit monolithically shaped and/or formed as a single part. The first housing member may provide said three or more openings with a part of the interior connecting said three or more openings. The second opening particularly with the second flange may provide that the apparatus can connect at an angle, e.g. to a gas-insulated electrical device. Alternatively or additionally, the first opening and/or the further opening may be closed with a cover, may be connected to another apparatus, or may be connected to a gas-insulated electrical device.

One of the first and the second housing members may have an inner face and the other one may have an outer face. For example, the first housing member may have the inner face and the second housing member may have the outer face. The inner face may be configured to surround the outer face. The inner face and/or the outer face may extend along the axial direction and/or may comprise a substantially cylindrical, round, concave and/or convex shape. The inner face and the outer face may extend substantially in parallel to one another, e.g. for a stable telescoping function.

The inner face and the outer face may be configured for sealing the interior such that insulating gas cannot pass, for example wherein at least one of the inner face and the outer face is configured to be smooth enough such that said sealing is realized, e.g. by means of a sealing element or a gasket or the like. For example, a smooth surface may be present if the mean surface roughness Ra is lower than 2 µm or lower than 1 µm, e.g. is 0.8 µm ± 0.5 µm.

At least one of the inner face and the outer face may exhibit a mean surface roughness value. An interior surface of the first housing member may exhibit a further mean surface roughness value. The mean surface roughness value(s) is/are lower than the further mean surface roughness value and/or are lower than 10 µm or 5 µm or 3 µm or 2 µm or 1 µm. Mean surface roughness is also known as the roughness Ra. The surface roughness may be considered as an average of two, three or more roughness measurements. An upper limit of the surface roughness, as suggested above, may reduce friction. Additionally, clear boundaries for roughness values may enable a cost-efficient manufacture: Productive and low-cost manufacturing processes can be selected while it can be ensured that machined surfaces fulfil functional requirements.

The apparatus may comprise a contact element that is configured for providing an electrical connection between the first housing member and the second housing member.

The contact element may be arranged for electrical connection between the first and the second housing members. The contact element is for example arranged in an annular gap between the housing members, e.g. in order to be in simultaneous contact to both housing members. The contact element may be arranged externally. The contact element may be configured as a moving contact and/or for sliding on one of the housing members and/or as a fixed contact or a flexible contact. The contact element may include at least one of zinc, carbon, graphite, iron, aluminum, copper, silver or gold. The contact element may be configured to conduct electricity, e.g. from one to another one of the housing members. The contact element may be configured to be in electrical contact to the housing members. The contact element may exhibit a contact area to the members it is in contact to, the area provided for flow of electric current and exhibiting a contact resistance.

The contact element may be configured to compensate relative movements between the housing members in the axial direction and/or a/the radial direction.

The apparatus may comprise a sealing element. The sealing element is typically configured for sealing between the first housing member and the second housing member. The sealing element may be annular. The sealing element may include or consist of one or more gaskets. For example, the sealing element may have a ring shape and/or may comprise a flexible material configured for sealing.

The apparatus may include a bellow, e.g. a polymer-based and/or metal-based bellow, e.g. for protection against outside pollution. The bellow may be coupled on one bellow section to the first housing member and on another bellow section to the second housing member and may be flexible between said bellow sections.

The apparatus may comprise a guiding element. The guiding element may be configured for guiding the first housing member and the second housing member relative to one another along the axial direction. The guiding element may be annular and/or ring-shaped. The guiding element may be arranged axially adjacent to the sealing element. The guiding element may be arranged between the first housing member and the second housing member in a direction perpendicular to the axial direction and/or in a/the radial direction. The apparatus may have two or more of the guiding element. The guiding element may be arranged in a groove of the first or second housing member. The guiding element is preferably arranged on an air side to protect the interior and/or the sealing element from outside pollution.

One of the first or second housing member may include at least one groove for the guiding element and/or the sealing element. One groove may be provided per one of said elements. The at least one groove may be formed with at least one of the inner face or the outer face.

The apparatus may have a conductor structure. The conductor structure may extend in the second housing member and in the first housing member and/or between at least two of the openings, e.g. the first and/or second opening and the further opening. The conductor structure may be isolated from the second housing member and the first housing member. The conductor structure may be arranged inside the interior and/or may extend from one to another one of the openings, e.g. at least to the further opening. Particularly, the conductor structure may be configured for single-phase electrical connection. There may be no more than one electrical phase transmitted via the apparatus.

The apparatus may have a rod structure connecting the first housing member, especially the first flange, with the second housing member, especially the further flange, and/or with another apparatus, especially another first flange, and typically outside from the interior and/or along the axial direction. The another first flange may be comprised by another apparatus or by the gas-insulated electrical device. The rod structure may be configured for transferring loads between the housing members and/or for guiding the housing members relative to one another. The rod structure may extend along and/or in parallel to the axial direction. The rod structure may include a first rod member and a second rod member and optionally one or more further rod members. The rod members may be arranged distributed around the first housing member and/or may be arranged substantially in parallel to one another and on opposite sides of the first housing member. Rod members may be solid metal tubes or rods or the like. For example, rod members may be distributed on the exterior of the apparatus. The rod structure, particularly one or more rod members or each of one or more rod members, may include a spring means configured for elastically storing energy as a function of a displacement between the housing member and the second housing member and/or the another apparatus or the another first flange. For example, the spring means may provide a counter force against displacement in order to stabilize the apparatus and/or to bring back the housing members automatically. The rod structure, particularly one or more rod members or each of one or more rod members, may be threaded, e.g. for length adjustment, a form fit for connection with the respective flange, or the like. The rod structure may be configured to carry a pressure load from the interior.

The first housing member, the second housing member, and/or the rod structure may be made from an aluminum alloy and/or steel. The conductor structure may be made from an aluminum alloy and/or a copper alloy. Aluminum is not only lightweight but also provides a good conductivity for its price. Copper provides a very good conductivity while it is relatively expensive compared to aluminum. Generally, aluminum alloys and copper alloys are preferred over steel or iron alloys. Further, structurally loaded parts may preferably made from one of aluminum alloy or steel. Steel may have a minimized thermal expansion relative to aluminum, which is for example very suitable for rod structure.

The object is also solved by means of a use of the apparatus for connection to a gas-insulated electrical device, particularly wherein the second housing member is configured for lateral dismantling of the interior and/or compensation of thermal expansion along the axial direction and/or for length compensation along the axial direction.

The object is also solved by means of a gas-insulated electrical system, comprising a gas-insulated electrical device and an/the apparatus. The apparatus may be connected with a/the first flange or a/the second flange or a/the further flange to the gas-insulated electrical device or to another apparatus at least partially designed as described herein. The use can provide several advantages as described above.

The term 'or' may be replaced by 'and/or' throughout the present disclosure. As such, where 'or' is used, it is not necessarily meant that merely alternatives are named.

Further advantageous implementations of the invention are given as follows. The features named in the implementations may be individually combined with each other or considered alone.

### Brief description of drawings

These and other aspects of the invention will be apparent from and elucidated with reference to the implementations described hereinafter.

In the drawings:
Fig. 1A-C shows an apparatus connected to a gas-insulated electrical device and to another apparatus in a perspective view (A) and in a sectional perspective view in respect to an axial direction (B, C); and
Fig. 2 shows a section of an apparatus in a sectional view.

### Description of implementations

The description contains procedural or methodical aspects upon describing structural features of the power semiconductor module; the structural features can be understood well in that way. It is emphasized to the reader that such structural features can be lifted from the described context without hesitation or the question of an intermediate generalization to form aspects of the invention. It is also emphasized to the reader that any the structural features described in the following can be understood as individual aspects of the invention to distinguish from known solutions, despite being possibly lifted from the context.

It is noted that aspects of the above described and shown embodiments may be combined.

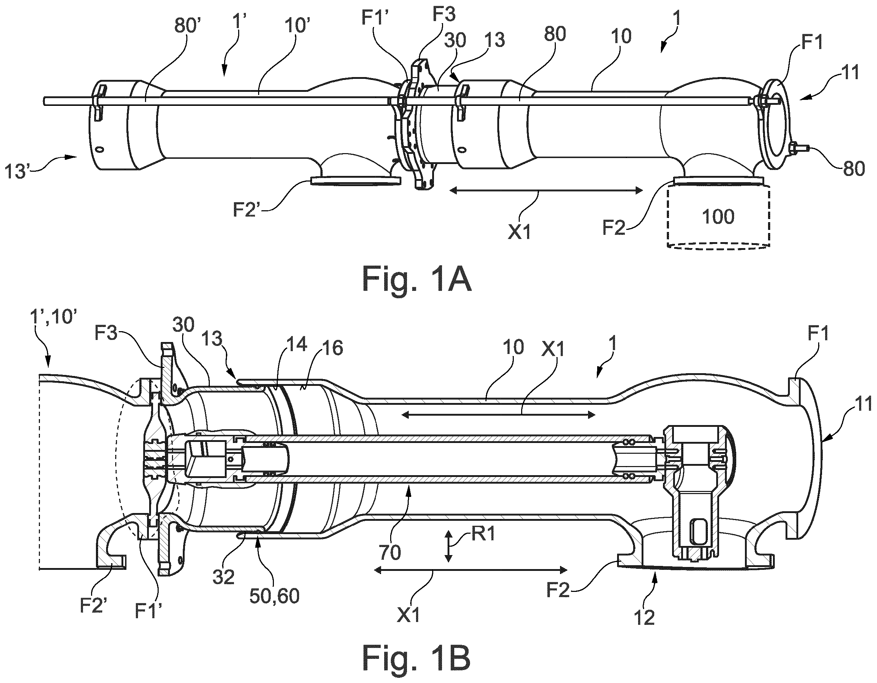

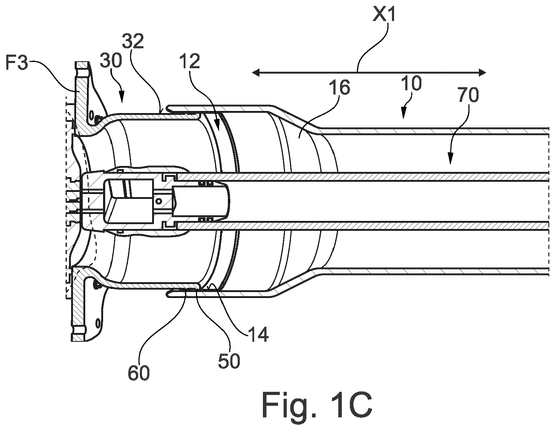

Fig. 1A-C shows an apparatus 1 that is configured for connection to a gas-insulated electrical device 100. The device 100 is shown schematically. The device 100 may be gas-insulated switchgear, GIS for short, or a gas-insulated line, GIL for short.

The apparatus 1 provides an interior for insulating gas. The apparatus 1 includes a first housing member 10 and a second housing member 30, both members 10, 30 sectionally forming the interior.

As can be seen e.g. in Fig. 1B, the first housing member 10 has openings 11, 12, and 13. A first opening 11 has a first flange F1 and a second opening 12 has a second flange F2. A further opening 13 is provided which is particularly defined by an inner face 14. The second housing member 30 has a further flange F3. The first flange F1 and the further flange F3 face away from one another along an axial direction X1. The first flange F1 and the second flange F2 are arranged perpendicularly in respect to one another. The first housing member 10 extends monolithically between the openings 11, 12, and 13.

The second housing member 30 is connected for telescoping in the axial direction X1 and in an electrically conductive manner to the first housing member 10 at the further opening 13.

The second housing member 30 may move or telescope relative to the first housing member 10 by at least 10 mm and/or up to 200 mm, particularly may move or telescope by at least 20 mm and/or up to 80 mm.

The sliding or telescoping provides that the second housing member 30 can be moved along the axial direction X1 for lateral dismantling, e.g. to reach the interior in a radial direction R1, and/or for length compensation.

For example, with respect to Fig. 1B, the second housing member 30 may be detached from an another first flange F1' and telescoped further towards the first housing member 30 such that an annular gap is given for said lateral dismantling.

The apparatus 1 may comprise a contact element configured for providing an electrical connection between the first 10 and second 30 housing members. The contact element provides that a current can flow between first 10 and second 30 housing members.

With reference to Figs. 1A-C, the inner face 14 of the first housing member 10 surrounds an outer face 32 of the second housing member 30. The inner face 14 and the outer face 32 extend along the axial direction X1 and comprise a substantially cylindrical shape. Additionally, the inner face 14 exhibits a mean surface roughness value, roughness Ra, which is for example on average below 2 µm or below 1 µm. The interior surface 16 of the first housing member 10 may exhibits a further mean surface roughness value which is higher than the mean surface roughness value, e.g. since the first housing member 10 generally is a cast part, e.g. wherein the inner face 14 is machined after casting to lower surface roughness.

A sealing element 50 is configured for sealing between the first housing member 10 and the second housing member 30. The sealing element 50 is annular and may include a gasket.

In some embodiments, the apparatus 1 may include a bellow.

The apparatus 1 or sealing element 50 may be configured such that the sealing element 50 is integrated and/or hidden. The sealing element 50 is arranged on an air side to protect the interior from outside pollution or the like.

It is further shown that the apparatus 1 comprises a guiding element 60, such as an annular protrusion on the second housing member 30, or additionally or alternatively on the first housing member 10. The guiding element 60 is configured for guiding the first housing member 10 and the second housing member 30 relative to one another along the axial direction X1. The guiding element 60 is annular and is arranged between the first housing member 10 and the second housing member 30 in a direction perpendicular to the axial direction X1.

The apparatus 1 includes a conductor structure 70 that extends within the second housing member 30 and the first housing member 10 and between at least two of the openings 11, 12, and 13, namely between the second opening 12 and the further opening 13. The conductor structure 70 is isolated from the second housing member 30 and the first housing member 10. The conductor structure 70 extends, in this case, perpendicularly and/or to provide an electrical connection between the second flange F2 and the further flange F3. The first flange F2 or the opening 11 may be closed by a cover, not shown in detail. The conductor structure 70, particularly the entire apparatus 1, is configured for single-phase electrical connection.

A rod structure 80 connects the first housing member 10, e.g. the first flange F1, and another first housing member 10' of another first flange F1' of another apparatus 1'. The connection by means of the rod structure 80 extends outside the interior and along the axial direction X1.

The rod structure 80 includes a first rod member and a second rod member that are arranged substantially in parallel to one another and on opposite sides of the first housing member 10.

Optionally, the rod structure 80 may include one or more further rod members with a spring means configured for elastically storing energy as a function of a displacement between the first flange F1 and the another first flange F1'.

The first housing member 10, the second housing member 30, and/or the rod structure 80 may be made from an aluminum alloy or steel

The conductor structure 70 may be made from an aluminum alloy or a copper alloy.

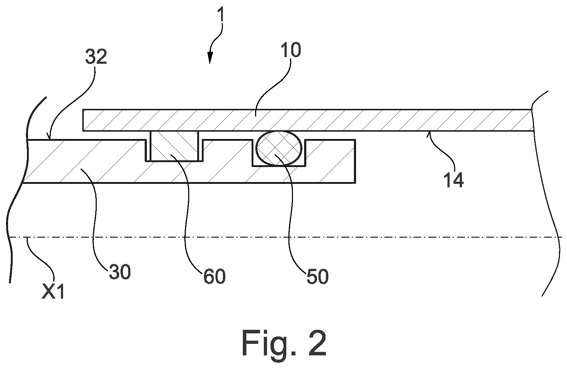

Fig. 2 shows a section of an apparatus 1. It can be seen that a second housing member 30 is connected for telescoping along an axial direction X1 and in an electrically conductive manner to a first housing member 10.

A contact element that provides an electrical connection between the housing members 10 and 30 is not shown in detail.

A guiding element 60 is arranged on an air side. The guiding element 60 can provide protection from outside pollution. Not shown is a bellow providing further protection against outside pollution.

An annular sealing element 50 seals between the first housing member 10 and the second housing member 30 such that insulating gas cannot leave the interior. Here, the sealing element 50 is a gasket.

Here, the sealing element 50 is arranged on the side towards the interior, i.e. typically in direct contact to the insulating gas.

The elements 50 and/or 60 are each arranged, optionally, in groove(s). The groove(s) may be formed in/with one or both of an inner face 14 and an outer face 32. Here, the grooves are formed with the outer surface 32. The elements 50 and/or 60 are in sliding contact to the inner face 14.

Shown and described is a use of an apparatus 1. The apparatus 1 is used for connection to a gas-insulated electrical device 100. The second housing member 30 is configured for lateral dismantling of the interior and/or compensation of thermal expansion along the axial direction X1.

Shown and described is a gas-insulated electrical system that includes a gas-insulated electrical device 100 and an apparatus 1. The apparatus 1 can be connected with each of the flanges F1, F2, F3 to a further gas-insulated electrical device or to a further apparatus. The apparatus 1 is connected with the second flange F2 to the device 100.

As shown in Fig. 1A-B, the apparatus 1 is connected with the further flange F1 to another apparatus 1' which is substantially identically designed in respect to the apparatus 1. The further flange F3 is connected to the first flange F1' of the another apparatus 1'. The another apparatus 1' provides another second flange F2' and another further opening 13', e.g. to connect to another gas-insulated device or the like. Another rod structure 80' extends in continuation of the rod structure 80 along the axial direction X1. The conductor structure 70 can extend along the axial direction X1 and through both apparatus 1 and apparatus 1'.

A flange F1, F1' F2, F2', F3 may be closed by means of a cover, which is not shown.

### Reference signs list

- 1: Apparatus

- 10: first housing member
- 11: first opening
- 12: second opening
- 13: further opening
- 14: inner face
- 16: interior wall

- 30: Second housing member
- 32: Outer face

- 50: sealing element

- 60: guiding element

- 70: Conductor structure

- 80: rod structure

- 100: gas-insulated electrical device

- F1: First flange
- F2: Second flange
- F3: Further flange
- R1: radial direction
- X1: axial direction

## Claims

1. Apparatus (1) for connection to a gas-insulated electrical device (100) and providing an interior for insulating gas, e.g. gas-insulated line or gas-insulated switchgear, comprising
a first housing member (10) sectionally forming the interior, having openings (11, 12, 13) of which a first opening (11) includes a first flange (F1), the first housing member (10) extending monolithically between the openings (11, 12, 13);
a second housing member (30) sectionally forming the interior, including a further flange (F3) and connected for telescoping in an axial direction (X1) and in an electrically conductive manner to the first housing member (10) at a further opening (13) of the openings (11, 12, 13); and
a rod structure (80) configured for connection of the first housing member (10) with the second housing member (30) or with another first housing member (10'), outside from the interior and along the axial direction (X1), the another first housing member (10') comprised by another apparatus (1') to be connected to the apparatus (1); wherein
the first flange (F1) and the further flange (F3) are arranged facing away from one another.

2. Apparatus (1) according to the preceding claim, wherein
a second opening (12) of the openings (11, 12, 13) includes a second flange (F2), and
the first flange (F1) and the second flange (F2) are arranged perpendicularly in respect to one another.

3. Apparatus (1) according to one of the preceding claims, wherein
the first housing member (10) has an inner face (14) surrounding an outer face (32) of the second housing member (30), and
the inner face (14) and the outer face (32) extend along the axial direction (X1) and comprise a substantially cylindrical shape.

4. Apparatus (1) according to one of the preceding claims, comprising
a contact element that is configured for providing an electrical connection between the first housing member (10) and the second housing member (30).

5. Apparatus (1) according to one of the preceding claims, comprising
a sealing element (50) configured for sealing between the first housing member (10) and the second housing member (30), wherein
the sealing element (50) is annular, and optionally
the sealing element (50) includes a gasket.

6. Apparatus (1) according to one of the preceding claims, comprising
a guiding element (60) configured for guiding the first housing member (10) and the second housing member (30) relative to one another along the axial direction (X1), wherein
the guiding element (60) is annular.

7. Apparatus (1) according to the preceding claim, wherein
the guiding element (60) is arranged between the first housing member (10) and the second housing member (30) a direction perpendicular to the axial direction (X1).

8. Apparatus (1) according to one of the preceding claims, comprising
a conductor structure (70) that extends in the second housing member (30) and in the first housing member (10) and between at least two of the openings (11, 12, 13) and is isolated from the second housing member (30) and the first housing member (10),

9. Apparatus (1) according to the preceding claim, wherein
the conductor structure (70) is configured for single-phase electrical connection.

10. Apparatus (1) according to one of the preceding two claims, wherein
the conductor structure (70) extends between two or more of
the first opening (11), the second opening (12) and the further opening (13).

11. Apparatus (1) according to one of the preceding claims, wherein
the rod structure (80) includes a first rod member and a second rod member and optionally one or more further rod members that are arranged substantially in parallel to one another and on opposite sides of the first housing member (10).

12. Apparatus (1) according to the preceding claim, wherein
the rod structure (80), e.g. the one or more further rod members, includes a spring means configured for elastically storing energy as a function of a displacement between the first flange (F1) and the further flange (F3) and/or the another first flange (F1').

13. Apparatus (1) according to one of the preceding claims, wherein
the first housing member (10), the second housing member (30) and the rod structure (80) are made from steel and/or an aluminum alloy.

14. Use of an apparatus (1) according to one of claims 1 to 13 for connection to a gas-insulated electrical device (100), wherein
the second housing member (30) is configured for lateral dismantling of the interior and/or for compensation of thermal expansion along the axial direction (X1) and/or for length compensation along the axial direction (X1).

15. Gas-insulated electrical system, comprising
a gas-insulated electrical device (100),
an apparatus (1) according to one of claims 1 to 13, wherein
the apparatus (1) is connected with the first flange (F1) or, if present, the second flange (F2) or the further flange (F3) to the gas-insulated electrical device or to another apparatus (1') according to one of claims 1 to 13.
